# EUROPEAN PATENT SPECIFICATION

(11) **EP 1 421 639 B1**
(45) Date of publication and mention of the grant of the patent: **25.07.2012**
(21) Application number: 02759903.4
(22) Date of filing: 30.08.2002
(51) Int. Cl.: H01M 8/04

(54) **FUEL CELL SYSTEM AND METHOD FOR RECYCLING EXHAUST**
BRENNSTOFFZELLENSYSTEM UND VERFAHREN ZUM AUSPUFF-RECYCLING
DISPOSITIF DE PILE A COMBUSTIBLE ET PROCEDE DE RECIRCULATION DES GAZ D'ECHAPPEMENT

(30) Priority: 31.08.2001 AU PR740601; 31.08.2001 AU PR740701
(43) Date of publication of application: 26.05.2004
(73) Proprietor: Ceramic Fuel Cells Limited, Noble Park, VIC 3174 (AU)
(72) Inventor: BARRETT, Scott Neil,, Pakenham, Victoria 3810 (AU); LAZIC, Zvonko,, Bundoora, Victoria 3083 (AU)
(74) Representative: Jones, Helen M.M.
(86) International application number: PCT/AU2002/001184
(87) International publication number: WO 2003/019707

(56) References cited:
- EP-A- 0 398 111
- EP-B- 0 673 074
- US-A- 3 718 506
- US-A- 4 002 805
- PRIESTMAN G.H. AND TIPPETTS J.R.: 'The application of a variable area jet pump to the external recirculation of hot flue gases' JOURNAL OF THE INSTITUTE OF ENERGY vol. 68, no. 477, December 1995, pages 213 - 219, XP008084858

## Description

### FIELD OF THE INVENTION

The present invention relates to a system and method for recycling exhaust particularly, but not exclusively, for use with a fuel cell assembly.

### BACKGROUND OF THE INVENTION

In the purest form of the reaction, fuel cells produce electricity from hydrogen and oxygen with water as a by-product in the form of steam. Inevitably, however, hydrocarbon fuels such as natural gas or higher (C₂₊) hydrocarbons are used as the source of hydrogen and air as the source of oxygen, with the hydrocarbon fuel being subjected to reforming upstream of the fuel cell assembly.

One of the advantages of a solid oxide fuel cell assembly is that the operating temperature range of about 700 to 1000°C is sufficiently high for internal steam reforming of the hydrocarbon fuel on a nickel catalyst on the anode side of each fuel cell. Since the anode of a solid oxide fuel cell is commonly nickel-based, for example a nickel cermet, at least some of the internal steam reforming may be performed on the anode.

Internal steam reforming of the hydrocarbon fuel has advantages for the operating efficiency of the fuel cell assembly, particularly in terms of balancing the exothermic fuel cell reaction with the endothermic reforming reaction. However, full internal reforming of the hydrocarbon fuel would tend to excessively cool the fuel cells by reforming endotherm and can lead to carbon deposition during preheating of the fuel mixture, so it has been proposed to use both steam pre-reforming and internal steam reforming of the hydrocarbon fuel. Examples of such systems are described in International Patent Applications WO 01/13452 and PCT/AU02/00128 of Ceramic Fuel Cells Limited.

Steam must be present in the fuel stream supplied to the fuel cell assembly in order for the internal steam reforming reaction to take place, and the proportion of steam to carbon (S/C) in the fuel supply is one of the important variables in the reforming reaction. Additionally, the presence of steam in the fuel stream tends to alleviate carbon deposition on the nickel catalyst.

It has been proposed to recycle exhaust from a fuel cell assembly such as one or more fuel cell stacks to provide the steam for the internal reforming reaction. In operating a steam-self sufficient fuel cell system, exhaust gas exiting the anode side of the assembly is recirculated and mixed with the incoming primary fuel stream. This also has the advantage of improving fuel utilisation limitations of the fuel cell assembly.

Recirculation of exhaust fuel gas in a fuel cell system is achieved by an arrangement which must be able to operate at high temperature. Various arrangements have been proposed by different fuel cell developers for introducing the anode exhaust gas into the inlet fuel gas stream. One proposal favoured by some fuel cell system developers has been to use a jet pump, for example as described in European Patent Application EP 0673074 and US 3,718,506. In such proposals the incoming or primary fuel stream is discharged through a fixed geometry precision machined nozzle. The resultant high velocity jet creates a vacuum in an entrainment chamber that is used to draw in the recycled fuel exhaust gas through a suction port. The two gas streams are mixed in a mixer tube of the jet pump and discharged to the anode side inlet manifold of the fuel cell assembly.

Jet pumps used as described above have a single fuel utilization design condition for optimum thermal efficiency of the fuel cell system, so that the recycled exhaust gas volume drawn in by the jet pump is theoretically proportional to the volume of the primary fuel stream (subject to disproportionate variations resulting from temperature differences in the system and the associated density changes of the primary and recycle flows, as well as from a varying volume of steam in the recycle stream).

This means that to operate the fuel cell system with a reduced electrical output, and consequently reduced fuel supply, there is traditionally a reduced volumetric fuel flow rate through the fuel cell assembly. The low flow rate presents challenges to maintaining an even flow distribution throughout the fuel cell assembly. An uneven fuel distribution results in an uneven fuel utilization between cells in the fuel cell assembly. The maximum localized fuel utilization is the factor that limits the safe (non-damaging) operation of the fuel cell.

Advantage would be gained in having control of the amount of anode exhaust gas recirculation to follow fuel utilization. In order to maintain thermal balance in the fuel cell assembly, a fuel cell system requires variation in the fuel utilization level throughout the operating range of output power from the assembly. A change in fuel utilization changes the steam content of the anode exhaust and therefore directly impacts the ratio of recycled anode exhaust gas that is required to achieve an adequate S/C ratio.

Further to this, peak shaving, as practiced by natural gas distributors around the world, can introduce a primary fuel supply of variable hydrogen to carbon ratio. This varies seasonally as the gas demand of the general market changes throughout the year. The variable hydrogen to carbon ratio also changes the anode exhaust gas recycle to primary fuel mass flow ratio requirements, but this can not be catered for by the jet pumps described above except by designing them for the worst case, which consequently leads to a reduction in efficiency.

Those proposing the use of jet pumps of the type described above have faced considerable difficulty in providing for a variable recirculation rate. On line trimming of recycle is unavailable and the system has a resonance time (of steam mass flow available) during current ramp up that limits the fuel flow ramp rate. As more steam is generated by the fuel cell assembly, more needs to be recycled to satisfy the steam requirements of the increased fuel flow. Significant excess steam supply is required in normal operation to provide rapid load-following capability and a safety margin for composition variations of the system feedstock fuel gas. This is a substantial disadvantage to the thermal efficiency of a fuel cell system when using jet pumps of the type described above.

Other developers of fuel cell systems have proposed the use of a hot gas blower combined with suitable mixing of recirculated exhaust and fresh fuel gas to achieve anode exhaust gas recirculation. However, the high temperature of the exhaust gas renders the use of a blower generally undesirable, particularly given a need for heat exchangers to first cool the gas upstream of the blower and then reheat the gas downstream of the blower. In addition to the difficulty of materials operating at these temperatures, such as metal creep and fatigue, a blower has disadvantages resulting from general mechanical wear, as well as from operating noise and vibration.

A hot air blower may have the advantage of enabling the ratio of primary fuel to recycle fuel exhaust gas to be varied. However, when the fuel cell system is operated at high electrical turndown (low electricity production), high exhaust recycle is required to maintain a desired volumetric fuel flow to the fuel cell assembly. Such a high exhaust recycle requires the highest blower duty and thus the highest electrical load. The electrical efficiency of the fuel cell system is thus substantially reduced at turndown due to turndown being the regime when the highest blower power requirements are present.

It is an aim of the present invention to alleviate the aforementioned disadvantages of known proposals for recycling fuel exhaust in fuel cell systems. This is achieved, according to the present invention, by the use of a jet pump having a variable nozzle area geometry that is adapted in use to control the cross-sectional area of the jet of primary fuel on entry to the mixing tube of the jet pump and thereby the kinetic energy imparted to the primary fuel stream. It thereby controls the ratio of recycled fuel exhaust entrained by the primary fuel stream in the jet pump.

A jet pump known as an adjustable area motive hydrogen ejector has been proposed for use in a fuel cell application by the Fox Valve Development Company of Dover, New Jersey, United States of America, in their pamphlet "Hydrogen Ejectors for Fuel Cells", for recycling hydrogen, steam and air at a maximum temperature of 500 °F (260°C). However, these devices use a variable needle and seat arrangement working in a choked (sonic) flow regime for the purposes of metering high pressure motive flow. Thus, the devices are proposed for use to control mass flow at primary stream pressures of several hundred kPa. As described their use is incapable of varying the flow rate of the recirculated stream independently of the motive or primary stream flow rate, and therefore is incapable of varying the entrainment ratio of the recirculating gas.

### SUMMARY OF THE INVENTION

According to the present invention there is provided a fuel cell system including a fuel cell assembly for producing electricity from a fuel and an oxygen-containing gas, a primary fuel line to the fuel cell assembly, a jet pump in the primary fuel line and adapted to be driven by the flow of primary fuel, the jet pump having a nozzle, an entrainment chamber downstream of the nozzle and a mixing tube downstream of the entrainment chamber, a fuel exhaust recycle line from the fuel cell assembly opening to the entrainment chamber for supply of fuel exhaust thereto, and a mass flow control device in the primary fuel line upstream of the jet pump for controlling the primary fuel flow rate to the jet pump, wherein the fuel exhaust contains steam and in that the nozzle of the jet pump has an adjustable cross-sectional area to provide a variable area flow therefrom of the primary fuel whereby the ratio of fuel exhaust entrained by the primary fuel in the entrainment chamber and the 5/C ratio in fuel delivered to afuel inlet of the fuel cell assembly can be varied.

Disclosed herein is a method of operating a fuel cells system in which fuel exhaust from a fuel cell assembly is recycled, wherein fuel exhaust is entrained in a primary fuel stream by means of a jet pump through a nozzle of which the primary fuel cell stream passes and is mixed with the primary fuel stream, and wherein the ratio of fuel exhaust in the mixed flow of primary fuel and fuel exhaust delivered to the fuel cell assembly is varied by adjusting the cross-sectional area of the jet pump nozzle and thereby adjusting the cross-sectional area of the primary fuel stream therethrough.

The entrainment achieved by the invention is thus disproportionate to the mass flow rate of the primary fuel stream. This is unlike the behavior of typical jet pumps proposed for use in fuel cell systems, which have a fixed geometry and do not change the cross section of the primary fuel stream. When the cross-section of the primary fuel stream is fixed, the primary and entrained recycle flows remain essentially proportional throughout the range of flow.

Advantageously, varying the recycle to primary fuel stream ratio changes the S/C ratio in the fuel stream to the fuel cell assembly. Thus, further according to the present invention there is provided a method for adjusting the proportion of steam in a fuel stream delivered to a fuel cell assembly in a fuel cell system, the method comprising recycling fuel exhaust containing steam from the fuel cell assembly by entraining and mixing the fuel exhaust in a primary fuel stream by means of a jet pump through a nozzle of which the primary fuel stream passes, wherein the ratio of fuel exhaust and the S/C ratio in the mixed flow of primary fuel and fuel exhaust delivered to the fuel cell assembly is varied by adjusting the cross-sectional area of the jet pump nozzle and thereby adjusting the cross-sectional area of the primary fuel stream therethrough.

In a preferred embodiment, the jet pump nozzle comprises a nozzle bore of fixed cross-section and a tapered valve body axially adjustable relative to the nozzle bore to vary the cross-sectional area of the nozzle. Variable area jet pumps of this type have been proposed for use in recirculating flue gas in a furnace system in a paper by G.H. Priestman and J.R. Tippetts entitled "The application of a variable-area jet pump to the external recirculation of hot flue gases" in the Journal of the Institute of Energy, December 1995, 68, pp213-219.

The valve body and nozzle bore in the preferred embodiment of jet pump may have any suitable cross-sectional shape, but preferably such shape is selected from circular, oval and finned. Generally, the nozzle bore and at least an inlet to the mixing tube from the entrainment chamber will have substantially the same cross-sectional shape.

Conveniently, the jet pump is capable of operating in a condition in which no fuel exhaust is entrained by the primary fuel stream passing through the jet pump nozzle. This can be achieved in the preferred embodiment of the jet pump, without a shut-off valve in the fuel exhaust recycle line, by providing the nozzle bore with a cross-sectional area that is larger than the cross-sectional area of an inlet to the mixing tube from the entrainment chamber when the valve body is fully retracted from the nozzle bore. This can have substantial advantage when the fuel cell assembly is purged, since the jet pump can be adjusted to entrain no fuel exhaust when the primary fuel stream is replaced with a purge gas that is non-combustible, such as an inert gas.

If one or more of the fuel cells in the fuel cell assembly breaks or cracks by some means, it is possible for air to pass from the cathode-side to the anode-side of that cell, leading to anode destruction. Such anode destruction is limited to the broken or cracked cell or cells when there is no recycle of the fuel exhaust. However, with fuel exhaust recycle, the air ingress to the fuel exhaust has the potential to contaminate the whole of the fuel side of the fuel cell assembly with oxygen. Generally, the oxygen contamination will be identified before the contaminated fuel exhaust is recycled with the primary fuel stream. However, a fuel-side purge will still contaminate the fuel-side with oxygen if contaminated fuel exhaust is entrained in the purge gas. Setting the jet pump so as to entrain no fuel exhaust alleviates the risk of fuel-side contamination.

Advantageously, in such a purge, fuel exhaust in the exhaust recycle line between the fuel cell assembly and the jet pump is purged by passing purge gas from the jet pump through the exhaust recycle line to an exhaust discharge outlet. In an embodiment in which the fuel exhaust recycle line is branched from a fuel exhaust line extending from the fuel cell assembly and delivers to the jet pump only the volume of fuel exhaust to be entrained, the motive purge gas can be directed both through the fuel cell assembly and in reverse flow along the fuel exhaust recycle line when the jet pump is set to entrain no fuel exhaust. This arrangement can reduce the resonance time of the purge function and can reduce the quantity of gas required for a purge.

In an alternative embodiment, the fuel exhaust recycle line delivers all of the fuel exhaust to the jet pump and the jet pump has an exhaust discharge outlet from the entrainment chamber for discharge of excess fuel exhaust. When the jet pump is set to entrain no fuel exhaust, all of the fuel exhaust will be discharged through the jet pump exhaust outlet. In this embodiment, all of the motive purge gas in a purge process may be delivered by the jet pump to the fuel cell assembly and pass from there through the fuel exhaust recycle line to the jet pump exhaust discharge outlet, when the jet pump is set to not entrain the exhaust.

The feature of the recycle line delivering all of the exhaust to the jet pump and the jet pump having an exhaust outlet from the entrainment chamber for discharge of excess exhaust has application to other exhaust recycle systems than fuel cell systems and is advantageous since recycling all of the exhaust directly through the entrainment chamber is simpler in construction than known recirculation systems. According to this aspect of the invention, there is provided a system for recycling exhaust, including an assembly for generating exhaust from a fuel, a primary fuel line to the assembly, a jet pump in the primary fuel line and adapted to be driven by the flow of primary fuel, a fuel exhaust recycle line from the assembly opening to an entrainment chamber of the jet pump for supply of all of the fuel exhaust from the assembly thereto, and an exhaust discharge outlet from the entrainment chamber, wherein a nozzle of the jet pump has an adjustable cross-sectional area to provide a variable area flow therefrom of the primary fuel whereby the ratio of fuel exhaust entrained by the primary fuel in the entrainment chamber can be varied, with excess fuel exhaust being discharged through the exhaust discharge outlet.

It will be appreciated that the discussion above and below relating to fuel cell system usage of a jet pump is generally applicable also to any other system and assembly for generating exhaust from a fuel as described in the immediately preceding paragraph.

In a fuel cell system, the present invention has advantage in allowing a variation of the mass flow of recirculated fuel exhaust as a proportion of the primary fuel flow during operation and in allowing the system to operate at a minimal recycle rate during normal operation, yet also allowing good response to ramp up fuel flow and electrical output. When reducing electrical production, and therefore when there is a lower fuel flow requirement, the variable geometry jet pump will provide higher fuel exhaust recirculation to dilute the primary fuel stream and maintain a desired fuel flow rate to the fuel cell assembly throughout the turndown range. At minimal power output, the mass fuel flow rate to the fuel cell assembly is therefore enhanced to aid fuel distribution and permit a much greater turndown range than is otherwise possible. Without this feature, low fuel flow to and poor fuel distribution within the fuel cell assembly during low power output operation will eventually produce local fuel starvation in one or more of the fuel cells and irreversible anode damage as the anode oxidizes. Preferably therefore, the method of the invention comprises adjusting the cross-sectional area of the jet pump nozzle to maintain a selected pressure differential range across the fuel cells in the fuel cell assembly.

Advantageously, with the system and method of the invention, the differential pressure across the anode side under different operating conditions of the fuel cell assembly does not vary by more than about 25% from the full power operating condition to the low power output operating condition. More preferably, the differential pressure does not vary by more than about 15%, and most preferably by not more than about 10%.

Any mass flow control of the primary fuel stream should be performed upstream of the jet pump. In many conditions of use of the jet pump, mass flow control of the primary fuel stream may be performed upstream of the jet pump by increasing the supply pressure of the primary fuel stream to the jet pump as the primary fuel flow rate is reduced and as the cross-sectional area of the primary fuel stream through the jet pump nozzle is reduced to increase the proportion of fuel exhaust in the mixed flow. However, there may be conditions, such as when reducing the fuel utilization, when the cross-sectional area of the primary fuel stream through the jet pump nozzle is reduced to increase the proportion of fuel exhaust in the mixed flow independently of the primary fuel flow rate. Thus, the ratio of fuel exhaust to primary fuel flow is changed to satisfy the chemical needs of the fuel cell assembly and to suit the operating conditions of the assembly.

Primary fuel flow may be delivered to the jet pump by, for example, a blower or pump in the fuel cell system. Preferably, however, the primary fuel is natural gas, which may have been subjected to partial pre-reforming, that is supplied to the fuel cell system at mains pressure of, say, 40 kPa. The flow rate control device may then comprise a pressure regulator that regulates the pressure down to the pressure required at the jet pump to control the desired mass flow. Conveniently, mass flow control is performed upstream of any pre-heating, pre-reforming and/or desulphurisation of the fuel. Any suitable technique may be used to measure the actual mass flow. For example, the flow could be sensed in the cold region by a flow sensor (thermal dispersion, vortex or orifice, etc). In one embodiment, the mass flow control function may be performed by a mass flow meter that has an integrated sensor, a flow control valve and/or pressure regulator. In another embodiment the mass flow control device comprises a pump controllable by means of a flow sensor in the primary fuel line upstream of the jet pump. This embodiment is useful when the primary fuel flow pressure needs to be increased in order to maintain a desired mass flow

Advantageously, the jet pump acts to provide a pressure drop between a primary fuel supply and the fuel cell assembly, thereby isolating the fuel cell assembly from variations in the fuel cell assembly exhaust pressure caused, for example, by flue effects or internal transient states. Conveniently, the primary fuel stream may be shut-off by means of the jet pump, for example, in the preferred embodiment, by inserting the tapered valve body fully into the nozzle bore.

In one embodiment of the fuel cell system, the fuel cell assembly is one of a plurality of fuel cell assemblies, each having a respective primary fuel line thereto with a respective said jet pump therein adapted to be driven by the flow of primary fuel, the fuel cell system further including a respective fuel exhaust recycle line from each fuel cell assembly opening to the entrainment chamber of the associated jet pump for supply of fuel exhaust thereto, the cross-sectional area of each jet pump nozzle being individually adjustable to provide a variable area flow therefrom of the primary fuel whereby the ratio of fuel exhaust entrained by the primary fuel in each jet pump is consequently varied.

With the plurality of fuel cell assemblies, a respective mass flow control device may be provided in each primary fuel line upstream of the associated jet pump for controlling the primary fuel flow rate to said jet pump. Alternatively, the respective primary fuel lines may branch from a common primary fuel line with the mass flow control device being disposed in the common primary fuel line.

Correspondingly, when the fuel cell system includes a plurality of fuel cell assemblies, each with a respective jet pump for recycling fuel exhaust to the respective assembly, an advantageous method feature of the invention is to individually adjust the cross-sectional area of each jet pump nozzle to vary the cross-section of the primary fuel stream therethrough and thereby independently adjust the ratio of fuel exhaust in the mixed flow of primary fuel and fuel exhaust delivered to the respective fuel cell assembly.

The fuel exhaust is preferably recycled from the respective fuel cell assembly, but it may be mixed with fuel exhaust from one or more other fuel cell assemblies with the mixed fuel exhaust being recycled to all of those fuel cell assemblies.

Preferably, the or each fuel cell assembly comprises a plurality of fuel cell stacks, most preferably each comprising a plurality of solid oxide fuel cells with each adjacent pair of fuel cells being separated by a gas separator plate.

Advantageously, each of a plurality of jet pumps associated with respective fuel cell assemblies is supplied with primary fuel from a common source. Without variation of the primary fuel flow rate, differential adjustment of the jet pumps will act to apportion the primary fuel flow between them. Any adjustment of a jet pump nozzle cross-sectional area will cause change to the flow resistance in that jet pump and, when the pressure drop over each jet pump is the same, the primary fuel flow will vary between each jet pump proportionally.

### BRIEF DESCRIPTION OF THE DRAWINGS

Two embodiments of a fuel cell system and method according to the invention will now be more fully described, by way of example only, with reference to the accompanying drawings, in which:
Figure 1 is a schematic system layout illustrating one embodiment of exhaust recirculation for a fuel cell stack;
Figures 2a and 2b are part-sectional diagrammatic perspective views of alternative jet pumps for use in the system of Figure 1;
Figure 3 is a schematic system layout illustrating a second embodiment of exhaust recirculation for a fuel cell stack; and
Figure 4 is a part-sectional diagrammatic perspective view of the fuel side of the system of Figure 3.

### DETAILED DESCRIPTION

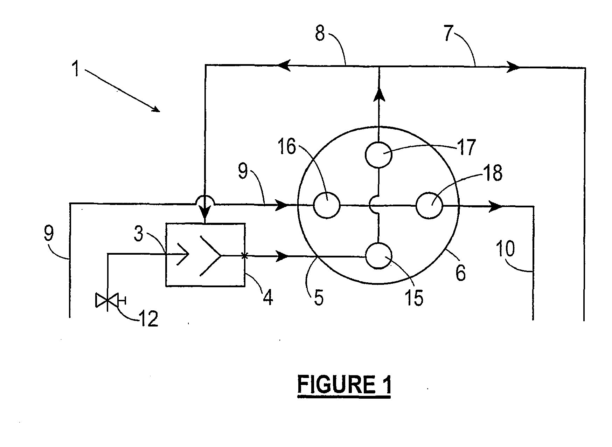

Referring to Figure 1, a primary or motive flow of hydrocarbon fuel is fed through a fuel line 2 to an inlet port 3 of a variable geometry jet pump 4, and then to a fuel inlet 5 of a fuel manifold 15 of a fuel cell stack 6. The fuel is then passed over the anode of each fuel cell in the assembly and exhausted via a fuel exhaust manifold 17 to an exhaust line 7. A portion of the fuel exhaust is drawn from the line 7 along a recycle line 8 into the jet pump 4 to be combined with the motive/primary fuel flow delivered through line 2. As fuel is fed through the stack 6 air also passes from an air inlet line 9 to an air inlet manifold 16, through the stack where it passes over the cathode of each fuel cell in the stack, and then through an air exhaust manifold 18 to an air outlet line 10.

The hydrocarbon fuel is conveniently natural gas, or a heavier hydrocarbon fuel, which may have been subjected to partial steam pre-reforming in a steam pre-reformer (not shown) upstream of the jet pump 4. Also upstream of the jet pump 4, and preferably of any pre-reformer, is a flow rate control device 12. If the fuel supply is natural gas, it may be delivered to the fuel cell system 1 at mains pressure of about 40 kPa, in which case the mass flow control device 12 may comprise a flow sensor coupled to a pressure reducing control valve that is adjustable to provide the desired mass flow at the primary fuel inlet 3. Alternatively, the device 12 could be, for example, a flow sensor coupled to a variable speed pump to provide the desired mass flow.

The fuel cell stack 6 may be one of several stacks of solid oxide fuel cells in a fuel cell assembly to which the jet pump 4 delivers a mixed flow of primary fuel and recycled fuel exhaust. In a preferred embodiment, the jet pump 4 delivers a fuel stream to four such fuel cell stacks 6. Fuel cell stacks of solid oxide fuel cells are well known to the addressee and, for convenience only, will not be described further.

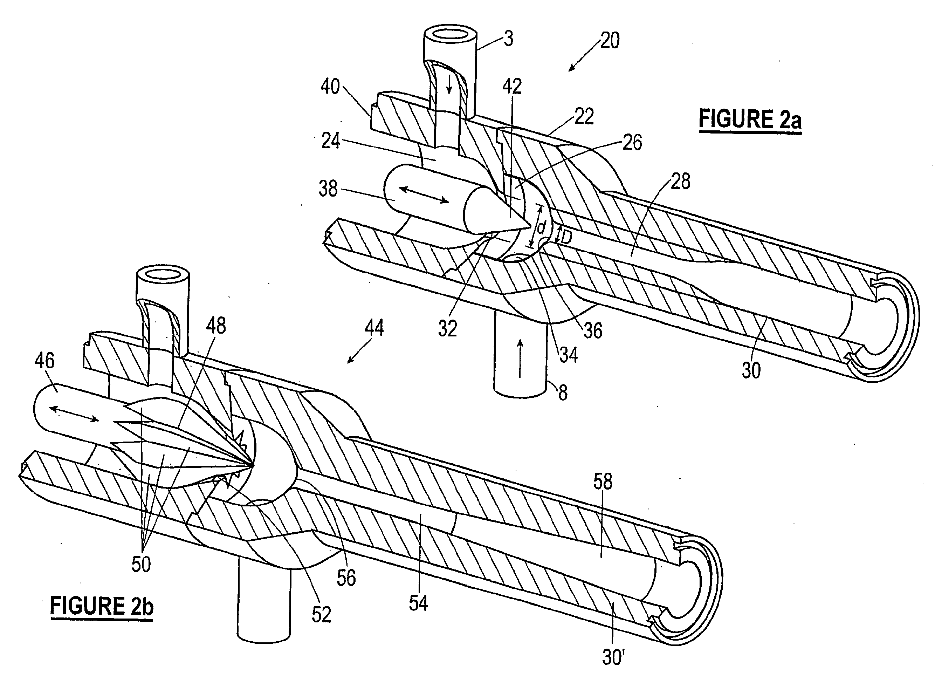

Referring now to Figure 2a, one embodiment 20 of the jet pump 4 is illustrated diagrammatically. The jet pump 20 has a body 22 defining an inlet chamber 24, an entrainment chamber 26, a mixing tube 28 of constant cross-sectional area and a fuel flow discharge outlet 30. A divergent diffuser section between the mixing tube 28 and the outlet 30 merges into the shape and size of the outlet and downstream pipework through a shallow angle to recover the kinetic energy in the mixed flow as static pressure. The primary fuel inlet 3 opens into the inlet chamber 24, and the inlet chamber communicates with the entrainment chamber 26 by way of a nozzle bore 32. The fuel exhaust recycle line 8 opens into the entrainment chamber by way of an aperture 34 (only partly visible in Figure 2a), and the entrainment chamber communicates with the mixing tube 28 by way of an inlet 3 6.

A spear valve body 38 extends axially through the inlet chamber 24 and is supported therein for axial adjustment by means not shown. Conveniently, the adjustment means may comprise a screw-threaded arrangement whereby rotation of the valve body advances or retracts it. The inlet chamber 24 is closed by a wall (not shown) at the end 40 of the jet pump body 22, and the spear valve body 38 extends through such wall in sealed manner. As the spear valve body 38 extends axially through the inlet chamber 24, the primary fuel inlet line 3 opens transversely to the chamber.

The spear valve body 38 has a tapered spear 42 at its leading end that can project into the nozzle bore 32 to define with the nozzle bore a variable area nozzle for the primary fuel flow. However, permissible axial adjustment of the valve body 38 is such that the tapered leading end 42 can be fully inserted into the nozzle bore 32 to close the nozzle or fully retracted it from the nozzle bore.

The nozzle bore 32, spear valve body 38, mixing tube 28 and mixing tube inlet 36 are shown with a circular cross-section, but they may be, for example, oval. The nozzle bore 32 has a diameter d that is greater than the diameter D of the inlet to the mixing tube 28, and therefore the cross-sectional area of the nozzle bore is greater than that of the mixing tube inlet. The tapered leading end 42 of the spear valve body had a cone angle of about 40°. In an alternative embodiment, not shown, the conical leading end 42 may be replaced by a rounded leading end, for example parabolic. Preferably, the rounded leading end merges with the rest of the valve body over a very shallow angle, for example in the range 0 to 5°, to provide fine control towards the closed position of the nozzle.

An alternative embodiment 44 of the jet pump 4 is shown in Figure 2b. The jet pump 44 is essentially the same as the jet pump 20, and for convenience it will therefore only be described insofar as it differs from the jet pump 20. The jet pump 44 has a spear valve body 46 having a tapered leading end 48 that is provided with enlarged radial fins or lobes 50. The nozzle bore 52 has a corresponding cross-section whereby the leading 48 of the spear valve body can close off the nozzle or be fully retracted from it. Furthermore, although not shown, the discharge tube 54 and its inlet 56 have a corresponding cross-sectional shape that is of the smaller area than the nozzle bore. The correspondingly lobed cross-sectional shape of the mixing tube inlet 56 may gradually merge with the cylindrical shape of the fuel delivery outlet 30' through the diffusor portion 58 or in the mixing tube 54. The lobed or ribbed configuration may enhance entrainment and mixing of the recycled fuel exhaust.

For convenience, the operation of the jet pump 20 in the fuel cell system 1 will be described. As with the previously proposed jet pump fuel cell exhaust recycle systems, directing the primary fuel in the jet pump inlet chamber 24 through the nozzle bore 32 changes the cross-sectional area of and increases the velocity of the primary fuel jet in the entrainment chamber when the spear valve body 38 is disposed in the nozzle bore to restrict the cross-sectional area of the nozzle. Thus, the pressure of the primary fuel flow upstream of the nozzle is partially converted to kinetic energy at the nozzle, with a consequential pressure drop across the nozzle. The pressure drop has the effect of reducing the pressure of the primary fuel flow in the entrainment chamber below that of the fuel exhaust at the recycled fuel exhaust inlet 8, thereby drawing the fuel exhaust into the entrainment chamber and thence into the mixing tube 28 where the two streams are mixed. The kinetic energy of the mixed stream is then recovered as pressure downstream of the reduced cross-sectional area mixing tube.

Advancing the spear valve body 38 in the nozzle bore 32 increases the pressure drop across the nozzle so that a greater proportion of fuel exhaust is drawn into the entrainment chamber 26 and into the mixing tube 28. This will enable a substantially constant pressure differential to be maintained across the anodes of the fuel cells in the fuel cell stack during turndown when a lower electricity output from the fuel cell stack is achieved by reducing the primary fuel flow to the jet pump and stack by means of the flow control device 12. Maintaining this lower mass flow of the primary fuel will require an increase in the motive pressure that is achieved by adjustment of the pressure regulator.

Correspondingly, the partial retraction of the spear valve body 38 from the nozzle bore 32 reduces the pressure drop across the nozzle with the result that a smaller proportion of fuel exhaust is entrained from the fuel exhaust recycle line 8.

If it is desired to adjust the fuel utilization to maintain the thermal balance in the fuel cell system, it is then desirable to adjust the proportion of steam recycled with the fuel exhaust. This may be achieved by adjusting the cross-sectional area of the nozzle, and therefore the pressure drop across the nozzle, without adjustment of the upstream flow rate control device. To explain further, in order to maintain thermal balance, a fuel cell system requires a variation in the fuel utilization level throughout the operating range of the output power from the fuel cell stack. A change in utilization will change the proportion of steam in the anode exhaust from the stack. Thus, a change in recycle ratio by adjusting the nozzle cross-sectional diameter, and therefore the pressure drop across the nozzle, may be used to compensate for this.

When the intent is to maintain a substantially constant differential pressure over the fuel side of the stack, so as to ensure that an adequate flow distribution of fuel is maintained throughout the stack when the primary fuel flow is reduced, the desired steam to carbon ratio is more than adequately maintained over the output power operating range by recycling the exhaust. Thus, high fuel utilizations may be used over the range of the system output power. This has advantages since the dilution of the fuel by the addition of steam at lower fuel utilisations tends to reduce the voltage output of a cell. Utilisation limitations at lower primary fuel flows may be alleviated according to the invention by better flow distribution, higher mass flows and lower thermal gradients in the stack.

A typical fuel utilization may be 25 to 70%, depending upon system deign and the power output condition. In the case of 65% of fuel utilization, the steam to carbon ratio at substantially constant differential pressure over the fuel side of the stack may vary in a range of , for example, about 2.25 to about 4.8 (as an indication of typical design) at 40% system output power. Under these conditions, modeling using a constant S/C ratio of 1 at an upstream pre-reformer has shown a flow variation at the fuel cell stack from 341 standard litres per minute when the S/C ratio is 2.25 at the stack and the jet pump primary fuel inlet pressure is 15 kPa to 196 standard litres per minute when the S/C ratio at the stack is 4.8 and the jet pump primary fuel inlet pressure is 40 kPa. This is indicative of the primary fuel flow rate change in standard litres per minute. The actual volumetric flow rate to the stack remains about the same in order to maintain the desired pressure differential across the fuel side, but it could be decreased or even increased slightly. It is also affected by temperature and fuel utilisation (which changes the gas composition).

A modelling of a fuel cell system application example of the embodiment described with reference to Figure 1 follows, assuming the efficiencies and thermal balance of a fuel cell system size approximating 40 kW. Also, under conditions of output power being reduced to 40%, constant fuel utilisation of 65% is assumed as an example under which the system may maintain thermal self sustenance. 40kPa motive pressure, for example from the reticulated gas pressure, is assumed to be available to the primary flow as dictated by the upstream mass flow control function.

As the output power is reduced, the primary fuel flow is reduced to 36% of the molar flow rate and, by adjusting the jet pump, the recycled exhaust volumetric flow rate is increased by 35% of the molar flow rate to supplement the reduction in primary fuel flow to the stack.

The subsequent mixed flow to the stack is reduced to 90% of the full power stack inlet molar flow rate. Therefore, although a somewhat decreased molar flow rate is observed at the stack, the reduction is disproportionate to the 64% reduction of the primary gas molar flow rate. The pressure differential over the anode side of the fuel cell stack is maintained to 77% of the differential pressure at full power. The disproportionate change in pressure is advantageous for maintenance of even thermal gradients through the stack and even flow distribution.

A further example follows for the fuel cell system described above, with the difference being that 75kPa motive pressure is assumed to be available to the primary flow as dictated by the upstream mass flow control function. In this case, the motive pressure may be provided by the availability of high reticulated gas pressures or by the use of a variable speed blower incorporated as a part of the upstream mass flow control function.

Under conditions of output power being reduced to 38%, a constant fuel utilisation of 65% is assumed as an example under which the system may be thermally self-sustaining.

In this case, the primary flow rate is reduced to 36% of the full power molar flow rate and the recycled exhaust volumetric flow rate is increased by 76% of the molar flow rate, by adjustment of the jet pump, to supplement the reduction in primary fuel flow to the stack. The subsequent mixed flow molar flow rate to the stack is increased by 12% above that used during full power operation, to thereby maintain the full power design target pressure differential over the anode side of the fuel cell stack.

Changing the fuel utilisation to maintain thermal balance allows a further reduction in the output power of the system whilst maintaining thermal balance. The examples above demonstrate the use of the jet pump over the limits of the maximum fuel utilisation operation.

In more general terms, using the fuel exhaust from the fuel cell stack 6 to augment the anode side volumetric fuel flow requirements when the molar flow rate of the primary fuel is reduced allows the fuel cell turndown range to be extended, whilst maintaining adequate flow for fuel distribution purposes. In other words, (1) volumetric reduction in primary fuel supplied to the fuel cell stack for reasons of reduced power output requirements during turndown (2), a change of fuel utilization or, for example (3), when seasonal demand causes fuel suppliers to vary the primary fuel hydrogen to carbon ratio, may all be readily compensated for by changing the ratio of exhaust in the mixed primary fuel and recycled exhaust flow delivered to the stack. This ensures that the anode-side of the stack has sufficient steam supply and flow-through to continue operating effectively, where otherwise insufficient distribution of fuel could cause damage to individual cells and necessitate shut down.

In some instances, no recycled exhaust at all may be needed in the fuel flow delivered to the stack 6 and it is for this purpose that the jet pump 20 is designed such that d > D. When the jet pump is operated so that the cross-sectional area of the primary fuel flow through the nozzle is greater than the cross-sectional area of the mixing tube inlet 34, no exhaust is entrained in the fuel flow. Such a mode of operation has particular advantage when air may have leaked into the fuel side of one of the fuel cells, such as by a crack in the cell or the like, since the oxygen-containing fuel exhaust could cause damage to the stack as a whole if allowed to recirculate through the stack. This problem can arise in normal usage of the fuel cell system or even when the system is purged following a leak in one of the fuel cells.

For a "purge" operation, a purge gas (preferably an inert gas) is supplied to the inlet chamber 24 of the jet pump 20, in place of primary fuel, and the jet pump nozzle is set so that exhaust is not entrained in the purge gas by retracting the spear valve body 38 from the nozzle bore 32. The purge gas is passed through the anode-side of the fuel cell stack to purge it. In addition, with d/D>1 'overspilling' of the inert gas can be utilized, whereby a portion of the inert gas is forced from the entrainment chamber 26 back toward the exhaust line 7, so as to fully purge exhaust from the system 1 by reversing fluid flow in the recycle line 8. The purge gas from both the stack 6 and the recycle line 8 is exhaust through the exhaust line 7.

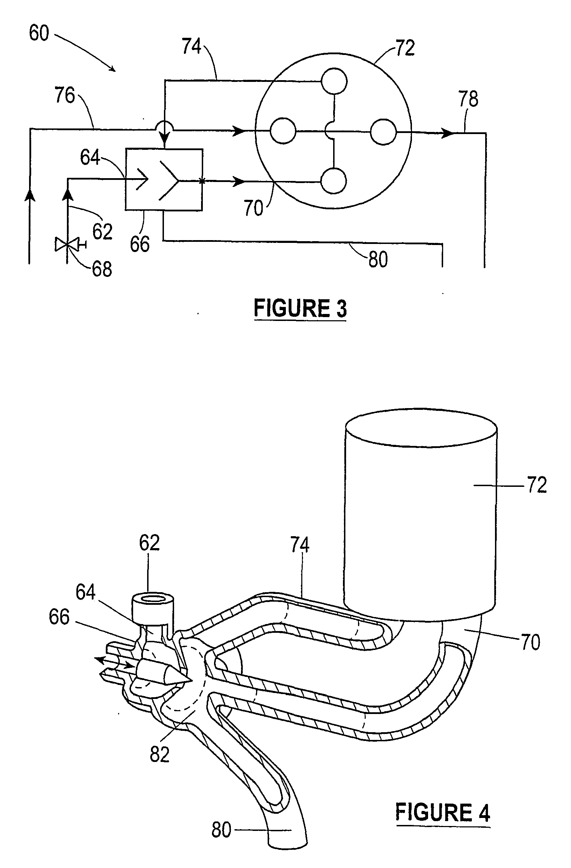

A second embodiment 60 of a fuel cell system according to the invention is illustrated in Figure 3. The system 60 for recycling exhaust is shown as having generally the same layout as the system 1, illustrated in Figure 1, in that a fuel line 62 provides primary fuel to an inlet port 64 of a variable geometry jet pump 66, by way of a flow control device 68, and in turn to a fuel inlet port 70 of a fuel cell stack 72. The fuel is likewise passed over a respective anode of each fuel cell in the stack and exhausted to an exhaust line 74. An air-inlet line 76 and an air-outlet line 78 are also provided to allow for flow of air through the cathode side of the stack in order for the stack 72 to generate electricity.

However, the system 60 does not have the separate recycle line 8 branched from the fuel exhaust line 7 shown in Figure 1, since the exhaust line 74 from the stack feeds directly into the jet pump 66. A recycle exhaust outlet line 80 from the jet pump 66 allows any exhaust which is not recycled through the stack 72 to exit the system 60.

Turning now to Figure 4, which shows only the fuel side of the system 60, the jet pump 66 may be seen to be similar to the jet pump 20 of Figure 2a (or the jet pump 44 of 2b), so only the differences will be described. The jet pump 66 has an enlarged entrainment chamber 82 into which all of the fuel exhaust is delivered by exhaust line 74, and the recycle exhaust outlet line 80 leads from the entrainment chamber to be exhausted through the fuel cell system. Apart from the fact that all the fuel exhaust passes through the entrainment chamber 82, the jet pump 66 operates in exactly the same way as the jet pump 20.

The system 60 presents an additional advantage to the system described with reference to Figure 1 in that the exhaust line 74 is passed directly to the jet pump so that no further plumbing work is needed to separately draw the exhaust through a recycle line 8 branched from the exhaust line 7.

Those skilled in the art will appreciate that the invention described herein is susceptible to variations and modifications other than those specifically described. It is to be understood that the invention includes all such variations and modifications which fall within its spirit and scope as defined by the claims.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference to any prior art in this specification is not, and should not be taken as, an acknowledgment or any form of suggestion that that prior art forms part of the common general knowledge.

## Claims

1. A fuel cell system (1, 60) including a fuel cell assembly (6, 72) for producing electricity from a fuel and an oxygen-containing gas, a primary fuel line (2, 62) to the fuel cell assembly, a jet pump (4, 66) in the primary fuel line and adapted to be driven by the flow of primary fuel, the jet pump having a nozzle (32), an entrainment chamber (26, 82) downstream of the nozzle and a mixing tube (28, 54) downstream of the entrainment chamber, a fuel exhaust recycle line (8, 74) from the fuel cell assembly opening to the entrainment chamber for supply of fuel exhaust thereto, and a mass flow control device (12, 68) provided in the primary fuel line upstream of the jet pump for controlling the primary fuel flow rate to the jet pump, **characterised in that** the fuel exhaust contains steam and **in that** the nozzle of the jet pump has an adjustable cross-sectional area to provide a variable area flow therefrom of the primary fuel whereby the ratio of fuel exhaust entrained steam to carbon by the primary fuel in the entrainment chamber and the ratio in fuel delivered
to a fuel inlet (5) of the fuel cell assembly can be varied.

2. A fuel cell system according to claim 1, **characterised in that** the jet pump nozzle (32) comprises a nozzle bore (32) of fixed cross-section and a tapered valve body (38, 46) axially adjustable relative to the nozzle bore to vary the cross-sectional area of the nozzle.

3. A fuel cell system according to claim 2, **characterised in that** the valve body (38, 46) and nozzle bore (32) have a cross-section that is selected from circular, oval and finned.

4. A fuel cell system according to claim 2 or claim 3, **characterised in that** the nozzle bore (32) and an inlet (34, 56) to the mixing tube (28, 54) from the entrainment chamber (26, 82) have substantially the same cross-sectional shape.

5. A fuel cell system according to any one of claims 2 to 4, **characterised in that** with the valve body (38, 46) fully retracted from the nozzle bore (32), the nozzle bore has a cross-sectional area that is larger than the cross-sectional area of an inlet (34, 56) to the mixing tube (28, 54) from the entrainment chamber (26, 82).

6. A fuel cell system according to any one of claims 1 to 5, **characterised in that** the fuel exhaust recycle line (8) is branched from a fuel exhaust line (7) extending from the fuel cell assembly (6, 72) and delivers to the jet pump (4) only the volume of fuel exhaust to be entrained.

7. A fuel cell system according to any one of claims 1 to 5, **characterised in that** the fuel exhaust recycle line (74) delivers all of the fuel exhaust to the jet pump (66) and the jet pump has an exhaust outlet (80) from the entrainment chamber (82) for discharge of excess fuel exhaust.

8. A fuel cell system according to any one of the preceding claims, **characterised in that** it operates at a primary fuel pressure of 40 kPa or less.

9. A fuel cell system according to any one of the preceding claims, **characterised in that** a fuel source supplies fuel to the system at a first pressure and wherein the mass flow control device (12, 68) provided in the primary fuel line (2, 62) upstream of the jet pump (4, 66) comprises a pressure regulator, the pressure regulator being adjustable to supply the primary fuel to the jet pump in a pressure range of no more than the first pressure.

10. A fuel cell system according to any one of claims 1 to 8, **characterised in that** the mass flow control device (12, 68) comprises a pump controllable by means of a flow sensor in the primary fuel line (2, 62) upstream of the jet pump (4, 66).

11. A fuel cell system according to any one of the preceding claims, **characterised in that** the fuel cell assembly (6, 72) is one of a plurality of fuel cell assemblies, each having a respective primary fuel line (2, 62) thereto with a respective said jet pump (4, 66) therein adapted to be driven by the flow of primary fuel, the fuel cell system further including a respective fuel exhaust recycle line (8, 74) from each fuel cell assembly opening to the entrainment chamber (26, 82) of the associated jet pump for supply of fuel exhaust thereto, wherein the cross-sectional area of each jet pump nozzle (32) is individually adjustable to provide a variable area flow therefrom of the primary fuel whereby the ratio of fuel exhaust entrained by the primary fuel in each jet pump is consequently varied.

12. A fuel cell system according to claim 11, **characterised in that** a respective mass flow control device (12, 68) is provided in each primary fuel line (2, 62) upstream of the associated jet pump (4, 66) for controlling the primary fuel flow rate to said jet pump.

13. A fuel cell system according to claim 11, **characterised in that** the respective primary fuel lines (2, 62) branch from a common primary fuel line and the mass flow control device (12, 68) is disposed in the common primary fuel line.

14. A fuel cell system according to any one of the preceding claims, **characterised in that** the or each fuel cell assembly (6, 72) comprises a plurality of fuel cell stacks.

15. A method for adjusting the proportion of steam in a fuel stream delivered to a fuel cell assembly (6, 72) in a fuel cell system (1, 60), the method comprising recycling fuel exhaust containing steam from the fuel cell assembly by entraining and mixing the fuel exhaust in a primary fuel stream by means of a jet pump (4, 66) through a nozzle of which the primary fuel stream passes, **characterised in that** the ratio of
steam to carbon fuel exhaust and the ratio in the mixed flow of primary fuel and fuel exhaust
delivered to the fuel cell assembly is varied by adjusting the cross-sectional area of the jet pump nozzle and thereby adjusting the cross-sectional area of the primary fuel stream therethrough.

16. A method according to claim 15, **characterised in that** the jet pump (4, 66) is capable of operating in a condition in which no fuel exhaust is entrained by the primary fuel stream passing through the jet pump nozzle (32).

17. A method according to claim 16, **characterised in that** the fuel cell assembly (6, 72) is purged by adjusting the jet pump nozzle (32) to entrain no fuel exhaust and replacing the primary fuel stream with a purge gas stream.

18. A method according to claim 17, **characterised in that** fuel exhaust in an exhaust recycle line (74) between the fuel cell assembly (72) and the jet pump (66) is purged by passing purge gas from the jet pump through the exhaust recycle line to an exhaust discharge outlet (80).

19. A method according to any one of claims 15 to 18, **characterised in that** only the volume of fuel exhaust to be entrained in the primary fuel stream is recycled by the jet pump (4).

20. A method according to any one of claims 15 to 18, **characterised in that** all of the fuel exhaust is recycled through the jet pump (66) and excess fuel exhaust is discharged from the jet pump through an exhaust discharge outlet (80).

21. A method according to any one of claims 15 to 20, **characterised in that** mass flow control of the primary fuel stream is performed upstream of the jet pump (4, 66).

22. A method according to claim 21, **characterised in that** the mass flow control comprises increasing the supply pressure of the primary fuel stream to the jet pump (4, 66) as the primary fuel flow rate is reduced and as the cross-sectional area of the primary fuel stream through the jet pump nozzle (32) is reduced to increase the proportion of fuel exhaust in the mixed flow.

23. A method according to any one of claims 15 to 22, **characterised in that** it comprises adjusting the cross-sectional area of the jet pump nozzle (32) to maintain a selected pressure differential range across the anode side of the fuel cells in the fuel cell assembly (6, 72).

24. A method according to claim 23, **characterised in that** the variation in pressure differential across the anode side of the fuel cells through the range of operating conditions of the fuel cell assembly is no more than about 10%.

25. A method according to any one of claims 15 to 24, **characterised in that** it comprises shutting off the primary fuel stream by means of the jet pump (4, 66).

26. A method according to any one of claims 15 to 25, **characterised in that** the jet pump (4, 66) acts to provide a pressure drop between a primary fuel supply and the fuel cell assembly (6, 72), thereby isolating the fuel cell assembly from variations in the system exhaust pressure.

27. A method according to any one of claims 15 to 26, **characterised in that** the fuel cell system (1, 60) includes a plurality of fuel cell assemblies (6, 72), each with a respective jet pump (4, 66) for recycling fuel exhaust to the respective assembly, and wherein the cross-sectional area of each jet pump nozzle (32) is individually adjustable to vary the cross-section of the primary fuel stream therethrough and thereby independently adjust the ratio of fuel exhaust in the mixed flow of primary fuel and fuel exhaust delivered to the respective fuel cell assembly.

28. A method according to claim 27, **characterised in that** differential adjustment of each jet pump nozzle (32) is used to control the respective primary fuel flow rates through the jet pumps (4, 66).

29. A method according to any one of claims 15 to 28, **characterised in that** the or each fuel cell assembly (6, 72) comprises a plurality of fuel cell stacks.

## Patentansprüche

1. Brennstoffzellen-System (1, 60), das eine Brennstoffzellen-Baugruppe (6, 72) zum Erzeugen von Elektrizität aus einem Brennstoff und einem sauerstoffhaltigen Gas, eine Primärbrennstoffleitung (2, 62) zu der Brennstoffzellen-Baugruppe, eine Strahlpumpe (4, 66) in der Primärbrennstoffleitung und dafür eingerichtet, durch den Durchfluss von Primärbrennstoff angetrieben zu werden, wobei die Strahlpumpe eine Düse (32), eine Eintragskammer (26, 82) stromabwärts von der Düse und eine Mischröhre (28, 54) stromabwärts von der Eintragskammer hat, eine Brennstoff-Abgasrückführungsleitung (8, 74) von der Brennstoffzellen-Baugruppe, die sich für die Zuführung von Brennstoff-Abgas zu der Eintragskammer öffnet, und eine Mengendurchfluss-Regelungseinrichtung (12, 68), die in der Primärbrennstoffleitung stromaufwärts von der Strahlpumpe bereitgestellt wird, um den Primärbrennstoff-Durchflussgeschwindigkeit zu der Strahlpumpe zu regeln, einschließt, **dadurch gekennzeichnet, dass** das Brennstoff-Abgas Dampf enthält, und dadurch, dass die Düse der Strahlpumpe eine einstellbare Querschnittsfläche hat, um einen veränderlichen Flächendurchfluss des Primärbrennstoffs von derselben zu gewährleisten, wodurch das Verhältnis des durch den Primärbrennstoff in der Eintragskammer eingetragenen Brennstoff-Abgases und das Dampf-Kohlenstoff-Verhältnis in dem einem Brennstoff-Einlass (5) der Brennstoffzellen-Baugruppe zugeführten Brennstoff verändert werden kann.

2. Brennstoffzellen-System nach Anspruch 1, **dadurch gekennzeichnet, dass** die Strahlpumpendüse (32) eine Düsenbohrung (32) mit einem feststehenden Querschnitt und einen verjüngten Ventilkorpus (38, 46), der in Axialrichtung im Verhältnis zu der Düsenbohrung verschoben werden kann, um die Querschnittsfläche der Düse zu verändern, umfasst.

3. Brennstoffzellen-System nach Anspruch 2, **dadurch gekennzeichnet, dass** der Ventilkorpus (38, 46) und die Düsenbohrung (32) einen Querschnitt haben, der aus kreisförmig, oval und gerippt ausgewählt ist.

4. Brennstoffzellen-System nach Anspruch 2 oder Anspruch 3, **dadurch gekennzeichnet, dass** die Düsenbohrung (32) und ein Einlass (34, 56) zu der Mischröhre (28, 64) von der Eintragskammer (26, 82) im Wesentlichen die gleiche Querschnittsform haben.

5. Brennstoffzellen-System nach einem der Ansprüche 2 bis 4, **dadurch gekennzeichnet, dass** mit dem vollständig von der Düsenbohrung (32) zurückgezogenen Ventilkorpus (38, 46) die Düsenbohrung eine Querschnittsfläche hat, die größer ist als die Querschnittsfläche eines Einlasses (34, 56) zu der Mischröhre (28, 54) von der Eintragskammer (26, 82).

6. Brennstoffzellen-System nach einem der Ansprüche 1 bis 5, **dadurch gekennzeichnet, dass** die Brennstoff-Abgasrückführungsleitung (8) von einer Brennstoff-Abgasleitung (7) abgezweigt ist, die sich von der Brennstoffzellen-Baugruppe (6, 72) aus erstreckt und der Strahlpumpe (4) nur das Volumen an Brennstoff-Abgas zuführt, das eingetragen werden soll.

7. Brennstoffzellen-System nach einem der Ansprüche 1 bis 5, **dadurch gekennzeichnet, dass** die Brennstoff-Abgasrückführungsleitung (74) das gesamte Brennstoff-Abgas der Strahlpumpe (66) zuführt und die Strahlpumpe einen Abgas-Auslass (80) aus der Eintragskammer (82) zum Ablassen von überschüssigem Brennstoff-Abgas hat.

8. Brennstoffzellen-System nach einem der vorhergehenden Ansprüche, **dadurch gekennzeichnet, dass** es bei einem Primärbrennstoff-Druck von 40 kPa oder weniger arbeitet.

9. Brennstoffzellen-System nach einem der vorhergehenden Ansprüche, **dadurch gekennzeichnet, dass** eine Brennstoffquelle dem System Brennstoff mit einem ersten Druck zuführt, und wobei die Mengendurchfluss-Regelungseinrichtung (12, 68), die in der Primärbrennstoffleitung (2, 62) stromaufwärts von der Strahlpumpe (4, 66) bereitgestellt wird, einen Druckregler umfasst, wobei der Druckregler eingestellt werden kann, um der Strahlpumpe den Primärbrennstoff in einem Druckbereich von nicht mehr als dem ersten Druck zuzuführen.

10. Brennstoffzellen-System nach einem der Ansprüche 1 bis 8, **dadurch gekennzeichnet, dass** die Mengendurchfluss-Regelungseinrichtung (12, 68) eine Pumpe umfasst, die mit Hilfe eines Durchfluss-Sensors in der Primärbrennstoffleitung (2, 62) stromaufwärts von der Strahlpumpe (4, 66) gesteuert werden kann.

11. Brennstoffzellen-System nach einem der vorhergehenden Ansprüche, **dadurch gekennzeichnet, dass** die Brennstoffzellen-Baugruppe (6, 72) eine von einer Vielzahl von Brennstoffzellen-Baugruppen ist, wobei jede eine jeweilige Primärbrennstoffleitung (2, 62) zu derselben hat, mit einer jeweiligen Strahlpumpe (4, 66) in derselben, die dafür eingerichtet ist, durch den Durchfluss von Primärbrennstoff angetrieben zu werden, wobei das Brennstoffzellen-System ferner eine jeweilige Brennstoff-Abgasrückführungsleitung (8, 74) von jeder Brennstoffzellen-Baugruppe zu der Eintragskammer (26, 82) der zugeordneten Strahlpumpe für die Zuführung von Brennstoff-Abgas zu derselben einschließt, wobei die Querschnittsfläche jeder Strahlpumpendüse (32) einzeln eingestellt werden kann, um einen veränderlichen Flächendurchfluss des Primärbrennstoffs von derselben zu gewährleisten, wodurch das Verhältnis des durch den Primärbrennstoff in jeder Strahlpumpe eingetragenen Brennstoff-Abgases dementsprechend verändert wird.

12. Brennstoffzellen-System nach Anspruch 11, **dadurch gekennzeichnet, dass** eine jeweilige Mengendurchfluss-Regelungseinrichtung (12, 68) in jeder Primärbrennstoffleitung (2, 62) stromaufwärts von der zugeordneten Strahlpumpe (4, 66) bereitgestellt wird, um die Primärbrennstoff-Durchflussgeschwindigkeit zu der Strahlpumpe zu regeln.

13. Brennstoffzellen-System nach Anspruch 11, **dadurch gekennzeichnet, dass** die jeweiligen Primärbrennstoffleitungen (2, 62) von einer gemeinsamen Primärbrennstoffleitung abzweigen und die Mengendurchfluss-Regelungseinrichtung (12, 68) in der gemeinsamen Primärbrennstoffleitung angeordnet ist.

14. Brennstoffzellen-System nach einem der vorhergehenden Ansprüche, **dadurch gekennzeichnet, dass** die oder jede Brennstoffzellen-Baugruppe (6, 72) eine Vielzahl von Brennstoffzellen-Stapeln umfasst.

15. Verfahren zum Einstellen des Verhältnisses von Dampf in einem Brennstoffstrom, der einer Brennstoffzellen-Baugruppe (6, 72) in einem Brennstoffzellen-System (1, 60) zugeführt wird, wobei das Verfahren das Zurückführen von Brennstoff-Abgas, das Dampf enthält, von der Brennstoffzellen-Baugruppe umfasst, durch das Eintragen und Mischen des Brennstoff-Abgases in einen Primärbrennstoff-Strom mit Hilfe einer Strahlpumpe (4, 66), wobei der Primärbrennstoff-Strom durch eine Düse derselben hindurchgeht, **dadurch gekennzeichnet, dass** das Verhältnis des Brennstoff-Abgases und das Dampf-Kohlenstoff-Verhältnis in dem gemischten Durchfluss von Primärbrennstoff und Brennstoff-Abgas, welcher der Brennstoffzellen-Baugruppe zugeführt wird, verändert wird durch das Einstellen der Querschnittsfläche der Strahlpumpendüse und dadurch das Einstellen der Querschnittsfläche des Primärbrennstoff-Stroms durch dieselbe.

16. Verfahren nach Anspruch 15, **dadurch gekennzeichnet, dass** die Strahlpumpe (4, 66) dazu in der Lage ist, in einem Zustand zu arbeiten, in dem kein Brennstoff-Abgas durch den durch die Strahlpumpendüse (32) hindurchgehenden Primärbrennstoff-Strom eingetragen wird.

17. Verfahren nach Anspruch 16, **dadurch gekennzeichnet, dass** die Brennstoffzellen-Baugruppe (6, 72) gespült wird durch das Einstellen der Strahlpumpendüse (32) so, dass kein Brennstoff-Abgas eingetragen wird, und das Ersetzen des Primärbrennstoff-Stroms durch einen Spülgasstrom.

18. Verfahren nach Anspruch 17, **dadurch gekennzeichnet, dass** Brennstoff-Abgas in einer Brennstoff-Abgasrückführungsleitung (74) zwischen der Brennstoffzellen-Baugruppe (72) und der Strahlpumpe (66) ausgespült wird durch das Hindurchführen von Spülgas von der Strahlpumpe durch die Brennstoff-Abgasrückführungsleitung zu einem Abgas-Ablassauslass (80).

19. Verfahren nach einem der Ansprüche 15 bis 18, **dadurch gekennzeichnet, dass** nur das Volumen an Brennstoff-Abgas, das in den Primärbrennstoff-Strom eingetragen werden soll, durch die Strahlpumpe (4) zurückgeführt wird.

20. Verfahren nach einem der Ansprüche 15 bis 18, **dadurch gekennzeichnet, dass** das gesamte Brennstoff-Abgas durch die Strahlpumpe (66) zurückgeführt wird und überschüssiges Brennstoff-Abgas durch einen Abgas-Ablassauslass (80) aus der Strahlpumpe abgelassen wird.

21. Verfahren nach einem der Ansprüche 15 bis 20, **dadurch gekennzeichnet, dass** eine Mengendurchfluss-Regelung des Primärbrennstoff-Stroms stromaufwärts von der Strahlpumpe (4, 66) durchgeführt wird.

22. Verfahren nach Anspruch 21, **dadurch gekennzeichnet, dass** die Mengendurchfluss-Regelung das Steigern des Zuführungsdrucks des Primärbrennstoff-Stroms zu der Strahlpumpe (4, 66) umfasst, wenn die Primärbrennstoff-Durchflussgeschwindigkeit verringert ist und wenn die Querschnittsfläche des Primärbrennstoff-Stroms durch die Strahlpumpendüse (32) verringert ist, um den Anteil an Brennstoff-Abgas in dem gemischten Durchfluss zu steigern.

23. Verfahren nach einem der Ansprüche 15 bis 22, **dadurch gekennzeichnet, dass** es das Einstellen der Querschnittsfläche der Strahlpumpendüse (32) umfasst, um einen gewünschten Druckgefälle-Bereich über die Anodenseite der Brennstoffzellen in der Brennstoffzellen-Baugruppe (6, 72) aufrechtzuerhalten.

24. Verfahren nach Anspruch 23, **dadurch gekennzeichnet, dass** die Veränderung in dem Druckgefälle über die Anodenseite der Brennstoffzellen durch den Bereich der Betriebsbedingungen der Brennstoffzellen-Baugruppe nicht mehr als etwa 10 % beträgt.

25. Verfahren nach einem der Ansprüche 15 bis 24, **dadurch gekennzeichnet, dass** es das Absperren des Primärbrennstoff-Stroms mit Hilfe der Strahlpumpe (4, 66) umfasst.

26. Verfahren nach einem der Ansprüche 15 bis 25, **dadurch gekennzeichnet, dass** die Strahlpumpe (4, 66) dazu dient, einen Druckabfall zwischen einer Primärbrennstoff-Zufuhr und der Brennstoffzellen-Baugruppe (6, 72) zu gewährleisten, wodurch die Brennstoffzellen-Baugruppe gegenüber Veränderungen in dem System-Abgasdruck isoliert.

27. Verfahren nach einem der Ansprüche 15 bis 26, **dadurch gekennzeichnet, dass** das Brennstoffzellen-System (1, 60) eine Vielzahl von Brennstoffzellen-Baugruppen (6, 72) einschließt, jede mit einer jeweiligen Strahlpumpe (4, 66) zum Zurückführen von Brennstoff-Abgas zu der jeweiligen Baugruppe, und wobei die Querschnittsfläche jeder Strahlpumpendüse (32) einzeln eingestellt werden kann, um die Querschnittsfläche des Primärbrennstoff-Stroms durch dieselben zu verändern und dadurch unabhängig das Verhältnis von Brennstoff-Abgas in dem gemischten Durchfluss von Primärbrennstoff und Brennstoffabgas, welcher der jeweiligen Brennstoffzellen-Baugruppe zugeführt wird, einzustellen.

28. Verfahren nach Anspruch 27, **dadurch gekennzeichnet, dass** eine differentielle Einstellung jeder Strahlpumpendüse (32) dazu verwendet wird, die jeweiligen Primärbrennstoff-Durchflussgeschwindigkeiten durch die Strahlpumpen (4, 66) zu regeln.

29. Verfahren nach einem der Ansprüche 15 bis 28, **dadurch gekennzeichnet, dass** die oder jede Brennstoffzellen-Baugruppe (6, 72) eine Vielzahl von Brennstoffzellen-Stapeln umfasst.

## Revendications

1. Système de pile à combustible (1, 60) comprenant un ensemble de pile à combustible (6, 72) pour produire de l'électricité à partir d'un combustible et d'un gaz contenant de l'oxygène, une conduite de combustible principal (2, 62) vers l'ensemble de pile à combustible, une pompe à jet (4, 66) dans la conduite de combustible principal et adaptée pour être entraînée par l'écoulement de combustible principal, la pompe à jet ayant une buse (32), une chambre d'entraînement (26, 82) en aval de la buse et un tube de mélange (28, 54) en aval de la chambre d'entraînement, une conduite de recyclage d'effluents gazeux de combustible (8, 74) de l'ouverture d'ensemble de pile à combustible vers la chambre d'entraînement afin d'alimenter cette dernière en effluents gazeux de combustible, et un dispositif de commande de débit massique (12, 68) disposé dans la conduite de combustible principal en amont de la pompe à jet afin de commander le débit du combustible principal vers la pompe à jet, **caractérisé en ce que** les effluents gazeux de combustible contiennent de la vapeur et **en ce que** la buse de la pompe à jet comprend une aire en coupe ajustable afin de fournir un écoulement de zone variable depuis cette dernière du combustible principal, moyennant quoi le rapport des effluents gazeux de combustible entraînés par le combustible principal dans la chambre d'entraînement et le rapport entre la vapeur et le carbone dans le combustible délivré à une admission de combustible (5) de l'ensemble de pile à combustible peut varier.

2. Système de pile à combustible selon la revendication 1, **caractérisé en ce que** la buse (32) de la pompe à jet comprend un alésage de buse (32) de section fixe et un corps de soupape effilé (38, 46) axialement ajustable par rapport à l'alésage de buse afin de faire varier l'aire en coupe de la buse.

3. Système de pile à combustible selon la revendication 2, **caractérisé en ce que** le corps de soupape (38, 46) et l'alésage de buse (32) ont une section qui est choisie parmi les formes circulaire, ovale, et à ailettes.

4. Système de pile à combustible selon la revendication 2 ou la revendication 3, **caractérisé en ce que** l'alésage de buse (32) et une admission (34, 56) dans le tube de mélange (28, 54) depuis la chambre d'entraînement (26, 82) ont sensiblement la même forme en coupe.

5. Système de pile à combustible selon l'une quelconque des revendications 2 à 4, **caractérisé en ce qu'**avec le corps de soupape (38, 46) entièrement rétracté de l'alésage de buse (32), l'alésage de buse a une aire en coupe qui est plus grande que l'aire en coupe d'une admission (34, 56) vers le tube de mélange (28, 54) depuis la chambre d'entraînement (26, 82).

6. Système de pile à combustible selon l'une quelconque des revendications 1 à 5, **caractérisé en ce que** la conduite de recyclage d'effluents gazeux de combustible (8) est dérivée depuis une conduite d'effluents gazeux de combustible (7) s'étendant de l'ensemble de pile à combustible (6, 72) et délivre à la pompe à jet (4) uniquement le volume d'effluents gazeux de combustible devant être entraîné.

7. Système de pile à combustible selon l'une quelconque des revendications 1 à 5, **caractérisé en ce que** la conduite de recyclage d'effluents gazeux de combustible (74) délivre la totalité des effluents gazeux de combustible à la pompe à jet (66) et la pompe à jet a un refoulement d'échappement (80) depuis la chambre d'entraînement (82) afin d'évacuer les effluents gazeux de combustible en excès.

8. Système de pile à combustible selon l'une quelconque des revendications précédentes, **caractérisé en ce qu'**il est exploité à une pression de combustible principal de 40 kPa ou moins.

9. Système de pile à combustible selon l'une quelconque des revendications précédentes, **caractérisé en ce qu'**une source de combustible fournit du combustible au système à une première pression et dans lequel le dispositif de commande de débit massique (12, 68) agencé dans la conduite de combustible principal (2, 62) en amont de la pompe à jet (4, 66) comprend un régulateur de pression, le régulateur de pression étant ajustable afin d'alimenter la pompe à jet en combustible principal dans une plage de pressions non supérieure à la première pression.

10. Système de pile à combustible selon l'une quelconque des revendications 1 à 8, **caractérisé en ce que** le dispositif de commande de débit massique (12, 68) comprend une pompe pouvant être commandée au moyen d'un capteur d'écoulement dans la conduite de combustible principal (2, 62) en amont de la pompe à jet (4, 66).

11. Système de pile à combustible selon l'une quelconque des revendications précédentes, **caractérisé en ce que** l'ensemble de pile à combustible (6, 72) est l'un d'une pluralité d'ensembles de pile à combustible, chacun y ayant une conduite de combustible principal (2, 62) respective avec une dite pompe à jet (4, 66) respective à l'intérieur adapté pour être entraînée par l'écoulement de combustible principal, le système de pile à combustible comprenant en outre une conduite de recyclage d'effluents gazeux de combustible (8, 74) respective depuis chaque ensemble de pile à combustible s'ouvrant dans la chambre d'entraînement (26, 82) de la pompe à jet associée afin de l'alimenter en effluents gazeux de combustible, dans lequel l'aire en coupe de chaque buse (32) de la pompe à jet est individuellement ajustable afin de fournir un écoulement de zone variable depuis cette dernière du combustible principal, moyennant quoi le rapport des effluents gazeux de combustible entraînés par le combustible principal dans chaque pompe à jet varie en conséquence.

12. Système de pile à combustible selon la revendication 11, **caractérisé en ce qu'**un dispositif de commande de débit massique (12, 68) respectif est agencé dans chaque conduite de combustible principal (2, 62) en amont de la pompe à jet (4, 66) associée afin de commander le débit du combustible principal vers ladite pompe à jet.

13. Système de pile à combustible selon la revendication 11, **caractérisé en ce que** les conduites de combustible principal (2, 62) respectives dérivent d'une conduite de combustible principal commune et le dispositif de commande de débit massique (12, 68) est disposé dans la conduite de combustible principal commune.

14. Système de pile à combustible selon l'une quelconque des revendications précédentes, **caractérisé en ce que** le ou chaque ensemble de pile à combustible (6, 72) comprend une pluralité d'empilements de piles à combustible.

15. Procédé d'ajustement de la proportion de vapeur dans un flux de combustible délivré à un ensemble de pile à combustible (6, 72) dans un système de pile à combustible (1, 60), le procédé comprenant le recyclage des effluents gazeux de combustible contenant de la vapeur depuis l'ensemble de pile à combustible en entraînant et mélangeant les effluents gazeux de combustible dans un flux de combustible principal au moyen d'une pompe à jet (4, 66) à travers une buse où le flux de combustible principal passe, **caractérisé en ce que** le rapport des effluents gazeux de combustible et le rapport entre la vapeur et le carbone dans l'écoulement mélangé de combustible principal et les effluents gazeux de combustible délivrés à l'ensemble de pile à combustible varie en ajustant l'aire en coupe de la buse de la pompe à jet et en ajustant ainsi l'aire en coupe du flux de combustible principal.

16. Procédé selon la revendication 15, **caractérisé en ce que** la pompe à jet (4, 66) est capable de fonctionner dans une condition dans laquelle aucun effluent gazeux de combustible n'est entraîné par le flux de combustible principal passant à travers la buse (32) de la pompe à jet.

17. Procédé selon la revendication 16, **caractérisé en ce que** l'ensemble de pile à combustible (6, 72) est purgé en ajustant la buse (32) de la pompe à jet afin de n'entraîner aucun effluent gazeux de combustible et en replaçant le flux de combustible principal par un flux de gaz de purge.

18. Procédé selon la revendication 17, **caractérisé en ce que** les effluents gazeux de combustible dans une conduite de recyclage d'effluents gazeux (74) entre l'ensemble de pile à combustible (72) et la pompe à jet (66) sont purgés en faisant passer du gaz de purge depuis la pompe à jet à travers la conduite de recyclage d'effluents gazeux vers un refoulement d'évacuation d'effluents gazeux (80).

19. Procédé selon l'une quelconque des revendications 15 à 18, **caractérisé en ce qu'**uniquement le volume des effluents gazeux de combustible devant être entraînés dans le flux de combustible principal est recyclé par la pompe à jet (4).

20. Procédé selon l'une quelconque des revendications 15 à 18, **caractérisé en ce que** la totalité des effluents gazeux de combustible est recyclée à travers la pompe à jet (66) et les effluents gazeux de combustible en excès sont évacués de la pompe à jet à travers un refoulement d'évacuation d'effluents gazeux (80).

21. Procédé selon l'une quelconque des revendications 15 à 20, **caractérisé en ce que** la commande de débit massique du flux de combustible principal est réalisée en amont de la pompe à jet (4, 66).

22. Procédé selon la revendication 21, **caractérisé en ce que** la commande de débit massique comprend l'augmentation de la pression d'alimentation du flux de combustible principal vers la pompe à jet (4, 66), lorsque le débit de combustible principal est réduit et lorsque l'aire en coupe du flux de combustible principal à travers la buse (32) de la pompe à jet est réduite afin d'augmenter la proportion d'effluents gazeux de combustible dans l'écoulement mélangé.

23. Procédé selon l'une quelconque des revendications 15 à 22, **caractérisé en ce qu'**il comprend l'ajustement de l'aire en coupe de la buse (32) de la pompe à jet afin de maintenir une plage de pressions différentielles sélectionnée à travers la buse (32) dans le côté anode des piles à combustible dans l'ensemble de pile à combustible (6, 72).

24. Procédé selon la revendication 23, **caractérisé en ce que** la variation de la pression différentielle dans le côté anode des piles à combustible à travers la plage de conditions de fonctionnement de l'ensemble de pile à combustible n'est pas supérieure à environ 10 %.

25. Procédé selon l'une quelconque des revendications 15 à 24, **caractérisé en ce qu'**il comprend l'arrêt du flux de combustible principal au moyen de la pompe à jet (4, 66).

26. Procédé selon l'une quelconque des revendications 15 à 25, **caractérisé en ce que** la pompe à jet (4, 66) agit pour fournir une baisse de pression entre une première alimentation en combustible principal et l'ensemble de pile à combustible (6, 72), isolant ainsi l'ensemble de pile à combustible de variations dans la pression d'effluents gazeux du système.

27. Procédé selon l'une quelconque des revendications 15 à 26, **caractérisé en ce que** le système de pile à combustible (1, 60) comprend une pluralité d'ensembles de pile à combustible (6, 72), chacun avec une pompe à jet (4, 66) respective permettant de recycler les effluents gazeux de combustible vers l'ensemble respectif, et dans lequel l'aire en coupe de chaque buse (32) de la pompe à jet est individuellement ajustable afin de faire varier la section du flux de combustible principal à travers ce dernier et ainsi d'ajuster indépendamment le rapport des effluents gazeux de combustible dans l'écoulement mélangé de combustible principal et les effluents gazeux de combustible délivrés à l'ensemble de pile à combustible respectif.

28. Procédé selon la revendication 27, **caractérisé en ce qu'**un ajustement différentiel de chaque buse (32) de la pompe à jet est utilisé pour commander les débits de combustible principal respectifs à travers les pompes à jet (4, 66).

29. Procédé selon l'une quelconque des revendications 15 à 28, **caractérisé en ce que** le ou chaque ensemble de pile à combustible (6, 72) comprend une pluralité d'empilements de piles à combustible.
